# EUROPEAN PATENT SPECIFICATION

(11) **EP 2 091 233 B1**
(45) Date of publication and mention of the grant of the patent: **08.05.2013**
(21) Application number: 09250322.6
(22) Date of filing: 10.02.2009
(51) Int. Cl.: H04N 5/232

(54) **Imaging apparatus**
Abbildungsvorrichtung
Appareil d'imagerie

(30) Priority: 12.02.2008 JP 2008030856
(43) Date of publication of application: 19.08.2009
(73) Proprietor: Ricoh Company, Ltd., Tokyo 143-8555 (JP)
(72) Inventor: Sakaguchi, Norihiro, Tokyo 143-8555 (JP)
(74) Representative: Leeming, John Gerard

(56) References cited:
- EP-A2- 1 519 560
- WO-A1-2007/045714
- US-A- 5 239 333
- US-A- 5 499 074
- US-A1- 2002 028 071

## Description

### Field of the Invention

The present invention relates to an imaging apparatus capable of rapidly performing an AF control regardless of the orientation of the imaging apparatus when photographing.

High-speed autofocus (AF) processing has been required in an imaging apparatus such as a digital camera ("camera" hereinafter). The known conventional AF is performed by obtaining an AF evaluation value which is contrast data of image signals output from an image pickup device, and controlling a focal position of an optical system when the AF evaluation value achieves a peak. When photographing a subject in a normal state where a shutter button provided on an upper side of the camera body is directed to an upper side of the camera, that is, the camera is in a horizontal direction, image signals output from the image pickup device for generating an AF evaluation value are read-out in a horizontal direction ("horizontal reading direction" hereinafter) in relation to the subject. On the other hand, when photographing a subject in a vertical state where the shutter button provided on the upper side of the camera is directed to a left or right side of the camera, a direction (for example, a longitudinal direction) of the image pickup device of the camera is inclined at 90 degrees in relation to the direction when the camera is in the horizontal state. In this case, the image signals are read-out in the direction ("vertical reading direction" hereinafter) substantially perpendicular to the subject image.

In general, most of the subject images have vertical stripes, that is, most of the subject images have strong contrast in a horizontal direction, and a gradient of the AF evaluation value obtained by reading-out image signals of such a subject image in the horizontal reading direction is normally sufficiently large to rapidly determine a peak of the AF evaluation values. On the other hand, the gradient of the AF evaluation values obtained by reading image signals of such a subject image in the vertical reading direction (for example, when photographing in the vertical state) is not sufficient enough to rapidly determine the peak of the AF evaluation values. That is, the AF control when photographing in the vertical state is more slowly performed than the AF control when photographing in the horizontal state.

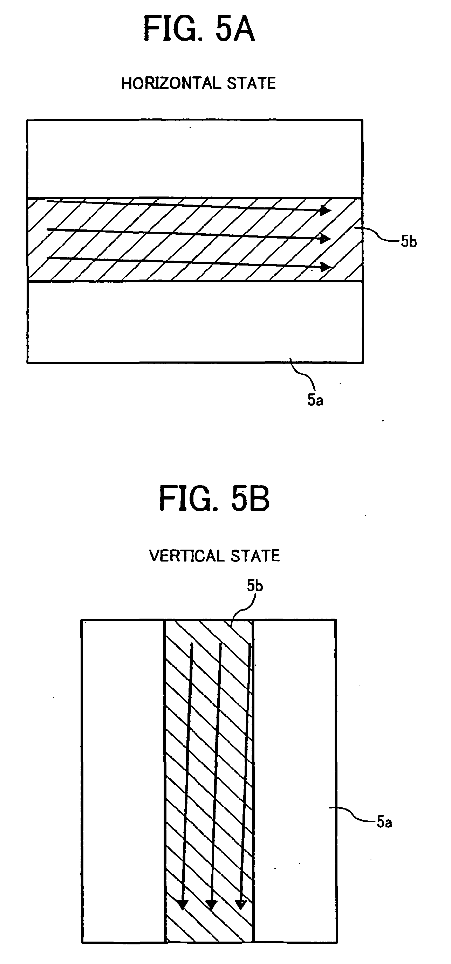

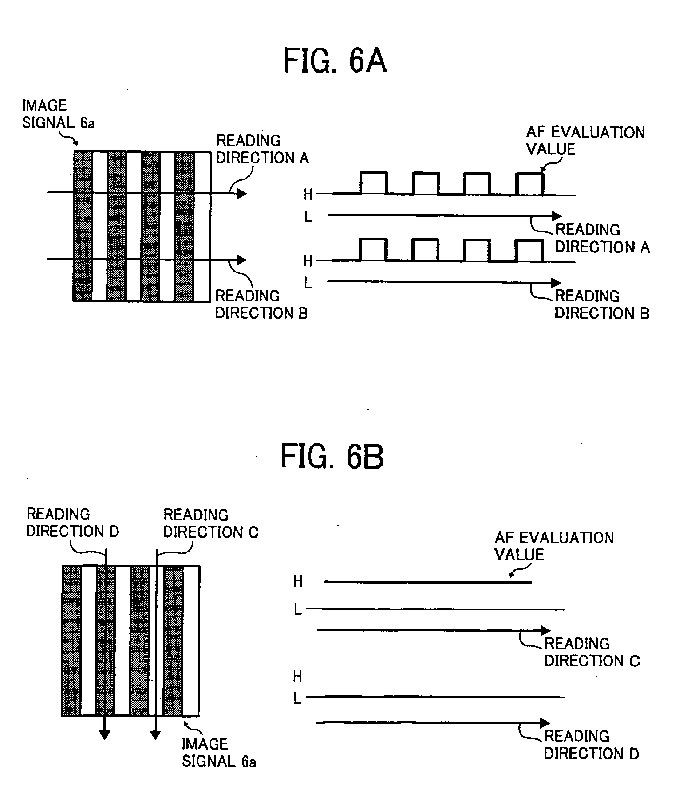

The difference of the AF evaluation values between the horizontal state and the vertical state is explained with reference to FIGs.5A to 6B. FIGs.5A and 5B schematically show the relationship between the image signals and the reading direction depending on the orientation of the camera. FIGs.6A and 6B schematically show the relationship between the reading direction and the change of the generated AF evaluation value depending on the orientation of the camera. In FIGs.5A and 5B, reference number 5a indicates an entire area of the image signals from the image pickup device and reference number 5b indicates a partial area of the entire area 5a of the image signals, which is to be focused, that is, a read-out area of the image signals used for generating an AF evaluation value. The read-out area 5b can be optionally set in the entire area 5a and it is preferable to set the read-out area 5b to an area including a center of the image, that is, a center of the entire area 5a, as shown in FIGs 5A and 5B. In FIGs.5A and 5B, arrows indicate the reading direction of the image signals. In FIGs.6A and 6B, reference number 6a indicates a part of the read-out area 5b shown in FIGs.5A and 5B, respectively, to emphasize the image signals of the subject image having vertical stripes. Reference numbers "A" and "B" indicate the reading directions, respectively. "H" and "L" of the AF evaluation value indicate the change of the AF evaluation value when reading out in the reading directions A and B, respectively. Contrast in blank portions of the read-out area 6b is represented by "H", and contrast in solid portions of the read-out area 6b is represented by "L". FIGs.5A and 6A show a case where the camera is in the horizontal state, and FIGs.5B and 6B show a case where the camera is in the vertical state.

As shown in FIG.5A, the image signals are read-out in a horizontal direction in relation to the subject image when photographing in the horizontal state, so that the contrast data is largely changed as shown in FIG.6A, and therefore, the gradient of the AF evaluation values generated based on the image signals increases. On the other hand, as shown in FIG.5B, when photographing in the vertical state, the image signals are read-out in a vertical direction in relation to the subject image, so that change of the contrast data is small, as shown in FIG.6B, and therefore, the gradient of the AF evaluation values generated based on the image signals is decreased. FIGs.6A and 6B show image signals to emphasize the contrast between the image signals.

As described above, it is known that, in order to precisely perform the AF control even when the gradient of the AF evaluation values is small, an image pickup device such as a CMOS sensor where a scanning direction of outputs of the image signals is changeable is used in a camera, and the outputs of the image signals are scanned in horizontal and vertical directions, regardless of the orientation of the camera (for example, Japanese Patent Application Publication No. 2004-151608). However, in the camera disclosed in Japanese Patent Application Publication No. 2004-151608, twofold processing compared to the conventional AF control is required, so that twofold time is required for the AF control. If a significant amount of time for the AF control is required, the probability of the subject to be photographed moving until the focal position is determined increases, and therefore it is necessary to perform the AF control again. Consequently, it becomes further difficult to perform high-speed AF control.

US 2002/0028071 A1 discloses a digital camera system having integrated accelerometers for determining static and dynamic accelerations of the digital camera system. Data relating to static and dynamic accelerations are stored with recorded image data for further processing, such as for correcting image data for roll, pitch and vibrations and for displaying recorded images with a predetermined orientation using information about, for example, roll. According to one disclosed embodiment, an image sensor configured to enable read out of pixels from each corner in two directions is provided in order to make it possible to rotate an image without the use of a large temporary storage media. In this embodiment, image information is read straight from the image sensor, which will result in an image with the proper rough orientation (landscape, portrait clockwise and portrait counterclockwise) as determined by roll and pitch information stored during the time of exposure.

EP 1 519 560 A2 discloses a system in which the attitude of an image sensing apparatus is detected, and optimum filter processing is selected based on the result of detection for extracting feature information of a subject, thus simplifying processing. While a shutter button is half-depressed, it is determined whether the image sensing apparatus is performing landscape image sensing or portrait image sensing based on attitude information obtain from an attitude sensor. Then, based on the result of the determination, one of two filter processing in different scan directions is performed thereby a person's face in an image is detected. Then, image sensing conditions at the next timing are determined based on the area of the person's face in the image. When the shutter button is full depressed, image sensing is performed in accordance with the latest image sensing conditions, and an obtained image is stored into a storage media such as a memory card.

US 5,239,333 A discloses a camera comprising focus detection means comprising photo-electric conversion device arrays. A first pair of photo-electric conversion device arrays are arranged horizontally and a second pair of photo-electric conversion device arrays are arranged vertically. The four photo-electric conversion device arrays are arranged on a plane on which light transmitted through an imaging lens is focused. The images of the four photo-electric conversion device arrays overlap each other to form a cross area. Photo-electrically converted outputs generated by the devices of the photo-electric conversion device arrays are supplied to a focus detection circuit.

An object of the present invention is to provide an imaging apparatus capable of rapidly performing a precise focusing, regardless of an orientation of the imaging apparatus.

The scope of the invention is defined in the appended claims.

The invention is described below with reference to exemplary embodiments and the accompanying drawings in which:
FIG.1 is a block diagram illustrating a function of a digital camera as an example of an imaging apparatus according to an embodiment of the present invention.
FIG.2 is a flowchart illustrating an example of an AF control of the imaging apparatus.
FIG.3A is a view illustrating an example of a scanning direction to generate an AF evaluation value in the imaging apparatus.
FIG.3B is a view illustrating an example of a scanning direction for an AF evaluation value in the imaging apparatus.
FIG.4 is a flowchart illustrating another example of an AF control of the imaging apparatus.
FIG.5A is a view illustrating an example of a scanning direction for an AF evaluation value in the conventional imaging apparatus.
FIG.5B is a view illustrating an example of a scanning direction for an AF evaluation value in the conventional imaging apparatus.
FIG.6A is a view illustrating an example of the relationship between the change of an AF evaluation value and a scanning direction in the conventional imaging apparatus.
FIG.6B is a view illustrating an example of the relationship between the change of an AF evaluation value and a scanning direction in the conventional imaging apparatus.

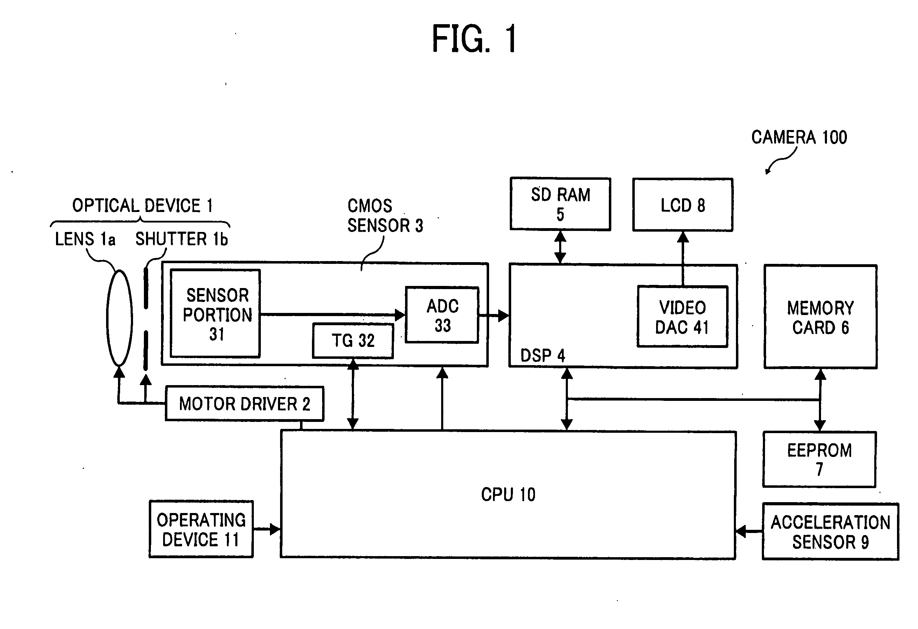

Preferred embodiments of the present invention will be explained in detail with reference to the accompanying drawings below. FIG.1 is a functional block diagram showing an imaging apparatus such as a camera 100, according to an embodiment of the present invention.
The camera 100 as the imaging apparatus according to the embodiment of the present invention includes an image pickup device 3 configured to image a subject image and output image signals in an array corresponding to the subject image, an evaluation-value generating device 4 configured to read the image signals in a direction (referred to as "reading direction" hereinafter) and generate evaluation values based on the read image signals, an orientation detecting device 9 configured to detect an orientation of the imaging apparatus, and a control device 10 configured to change the reading direction of the evaluation-value generating device in accordance with the orientation of the imaging apparatus. The evaluation-value generating device 4 is, for example, a digital signal processor (DSP) 4 which performs image signal processing. The control device 10 is, for example, a CPU 10 which controls the entire operation of the camera 100. The image pickup device 3 may be configured to output the image signals in a changeable scanning direction and may be, for example, a CMOS sensor 3 having two-dimensionally arranged pixels. The orientation detecting device 9 may be an attitude detecting device configured to detect an attitude of the camera including a position and an orientation of the imaging apparatus. In this embodiment, an acceleration sensor 9 configured to detect the acceleration of the imaging apparatus to determine the direction of the camera 100, that is, the orientation of the imaging apparatus is used. The evaluation-value generating device 4 may be configured to generate an AF evaluation value based on a frequency component of the image signal of the subject image. In FIG.1, the camera 100 includes an optical system 1 having a lens 1a and a shutter 1b, a focus adjustment device such as a motor driver 2 configured to adjust a focal point of the optical system 1 of the camera 100 based on a command of the CPU 10, including, for example, the AF evaluation value, an SDRAM 5 configured to store RAW data or data obtained by processing signals, a memory card 6 configured to store a photographed subject image, an EEPROM 7 configured to hold various adjustment values used for generating an AF evaluation value, an LCD 8 configured to display a confirmation image for confirming a photographed image, replayed image or operation setting information of the camera 100, and an operating device 11 which is used for performing a photographing operation or a setting operation of the camera 100.

The CMOS sensor 3 includes a sensor portion 31 which outputs image signals based on a subject image photographed via the optical system 1, a timing generator (TG) 32 which controls a sampling timing of outputs of the sensor portion 31, and an AD convertor (ADC) 33 which converts the outputs of the sensor portion 31 into digital data. Thereby, the CMOS sensor 3 performs operation control in accordance with the command of the CPU 10. The digital data output from the CMOS sensor 3 are stored in the SDRAM 5 as RAW data arranged in an array corresponding to the array of the two-dimensionally arranged pixels of the CMOS sensor. Hereinafter, the term "image signals" indicates the above-described "RAW data".

The DSP 4 generates evaluation values for automatic exposure (AE), white balance correction, or the like, as well as generating the AF evaluation values based on the image signals output from the CMOS sensor. The CPU 10 controls operation of the motor driver 2 by use of the evaluation values. In a normal still image processing, the DSP 4 reads out the RAW data from the SDRAM 5, generates a brightness signal and a color signal, performs a JPEG processing, and then stores the processed signals in the memory card 6. The data converted into RGB or YUV to be displayed from the RAW data are output from a Video DAC (digital-analog converter for video) 41 and then displayed on the LCD 8.

The CPU 10 performs control of the AF, the AE, the white balance correction, or the like, based on the evaluation values generated by the DSP 4. The CPU 10 has a function of setting parameters for devices such as the CMOS sensor 3, the DSP 4, and the like, a function of performing processing in accordance with an input from the operating device 11 operated by a photographer, and the like. For example, in the AE, the image signals of the CMOS sensor 3 when monitoring is allowed to pass a band-pass filter, and the DSP 4 generates an AF evaluation value in accordance with a frequency component of the brightness signal of the filtered signals. Thereby, the CPU 10 controls the driving pulse of a focus motor via the motor driver 2 based on the AF evaluation value. The scanning direction of the CMOS sensor 3 and/or the reading direction of the DSP 4 may be changed by operating the operating device 11.

Furthermore, the CPU 10 determines whether the camera is in a horizontal state or in a vertical state based on a direction of the camera 100, which is obtained by the acceleration sensor 9. Here, the horizontal state is, as a normal state for photographing, for example, in a state where a longitudinal direction of the CMOS sensor 3 is substantially parallel to the horizontal direction, and the vertical state is, for example, a state where the longitudinal direction of the CMOS sensor 3 is substantially perpendicular to the horizontal direction. That is, the CPU 10 may be configured to set the reading direction of the DSP 4 to the longitudinal direction of the CMOS sensor 3 when the acceleration sensor 9 detects a horizontal orientation of the camera 100, and to a short-side direction of the CMOS sensor when the acceleration sensor 9 detects a vertical orientation of the camera 100. In accordance with the orientation of the camera 100 determined by the CPU 10, the CPU 10 sets a read-out area of the image signals output from the CMOS sensor 3 and the reading direction of the DSP 4 or the scanning direction of the CMOS sensor 3.

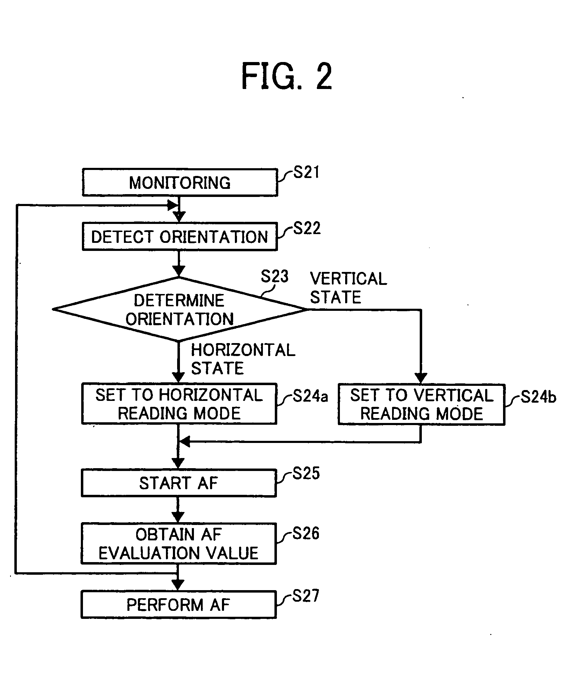

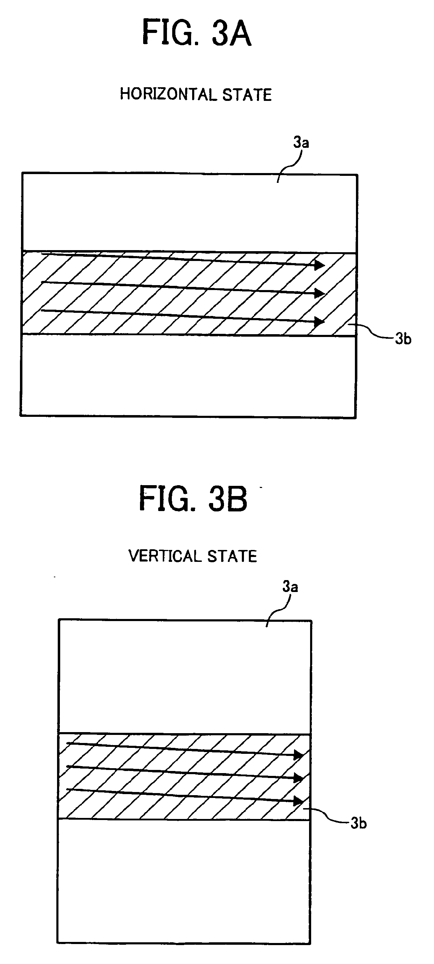

Next, a flow of the AF in the camera 100 according to an embodiment of the present invention will be explained with reference to a flowchart shown in FIG.2 and FIG.3. In FIG.2, the flow of the AF is shown by the steps S21 to S27. In FIG.3, reference number 3a indicates an entire area of the image signals, and reference number 3b indicates a read-out area of the image signals for obtaining the AF evaluation values. The read-out area 3b is optionally set and it is preferable to set the read-out area 3b to an area including a center portion of the subject image, that is, a center of the entire area 3a. In FIG.3, the reading direction is shown by arrows.

At first, the camera 100 images a subject image via the CMOS sensor 3 as the image pickup device to output image signals of the subject image and the image signals are input to the DSP 4 (S21). Next, the acceleration sensor 9 detects the direction of the camera 100 (S22), and thereby, the CPU determines the orientation of the camera 100 (S23). If it is determined that the orientation of the camera 100 is a horizontal orientation, that is, the camera 100 is in the horizontal state, the CPU 10 sets the entire area 3a and the read-out area 3b as a horizontal reading mode, as shown in FIG.3A (S24a). If it is determined that the orientation of the camera 100 is a vertical orientation, that is, the camera 100 is in the vertical state, the CPU sets the entire area 3a and the read-out area 3b as a vertical reading mode, as shown in FIG.3B (S24b).

Next, the image signals in the read-out area 3b set in the above steps are read out in the predetermined direction (S25), and the AF evaluation value is obtained (S26). That is, in a case where it is determined that the camera 100 is in the horizontal state in step S23, as shown in FIG.3A, in the horizontally long entire area 3a, a horizontally long read-out area 3b is set at a center portion in a vertical direction of the entire area 3a and a horizontal reading direction is set to generate the AF evaluation value. Thereby, any change of the AF evaluation value of the subject image having strong contrast in the horizontal direction can be appropriately detected so that high speed AF control can be achieved. In a case where it is determined that the camera 100 is in the vertical state in step S23, as shown in FIG.3B, in the vertically long entire area 3a, the horizontally long read-out area 3b is set at a center portion in a vertical direction of the entire area 3a and a horizontal reading direction is set to generate the AF evaluation value. Thereby, any change of the AF evaluation value of the subject image also having strong contrast in the horizontal direction can be appropriately detected, so that high speed AF control can be achieved.

The CPU 10 performs a peak determination of the AF evaluation value based on the obtained AF evaluation values and controls a driving pulse of a driving motor of the optical system 1 via the motor driver 2 to move the optical system 1 to a focused focal position (S27).

In the above-described embodiment, although the orientation detection process in step S22 is performed when the subject image is taken in the image pickup device after turning on power of the camera 100, the present invention is not limited thereto and the orientation detection may be repeatedly performed at intervals while the power of the camera 100 is on. For example, the orientation detection may be performed when or after the shutter button which is included in the operating device 11 is pressed down.

In the above-described embodiment, although the CPU 10 is configured to change the reading direction of the image signals for obtaining the AF evaluation value in accordance with the direction of the camera 100 detected by the acceleration sensor 9, the present invention is not limited thereto and the CPU 10 may change the scanning direction in which the outputs of the image signals from the CMOS sensor 3 are scanned in accordance with the direction of the camera 100 detected by the acceleration sensor 9. In this case, the reading direction of the image signals for obtaining the AF value may be set to the same as the scanning direction of the CMOS sensor 3.

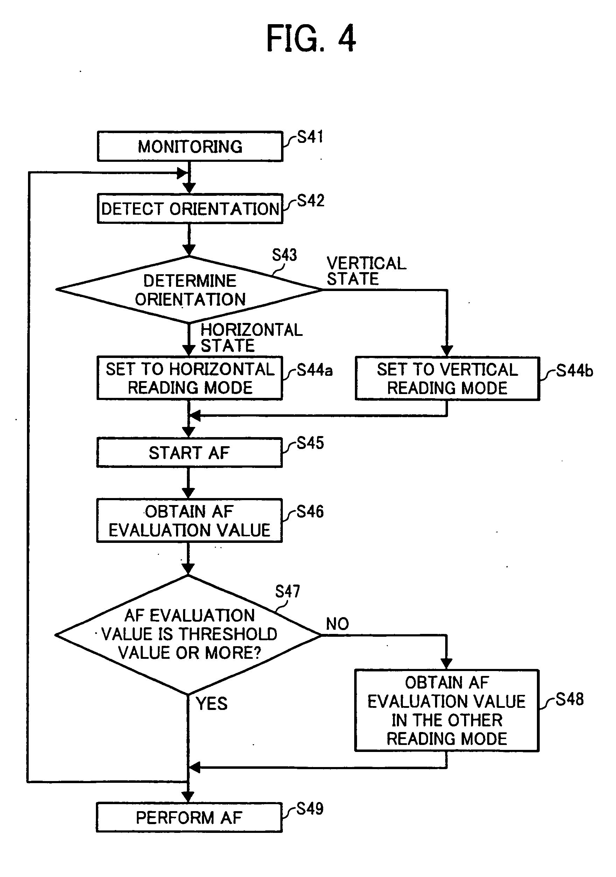

Next, another example of the AF in the camera 100 according to the present invention will be explained with reference to a flowchart shown in FIG.4.

At first, the camera 100 images a subject image via the CMOS sensor 3 as the image pickup device to output image signals of the subject image, and the image signals are input to the DSP 4 (S41). Then, the acceleration sensor 9 detects the direction of the camera 100 (S42), and thereby, the CPU determines the orientation of the camera 100 (S43). If it is determined that the orientation of the camera 100 is a horizontal orientation, that is, the camera 100 is in the horizontal state, the CPU 10 sets the entire area 3a and the read-out area 3b as a horizontal reading mode, as shown in FIG.3A (S44a). If it is determined that the orientation of the camera 100 is a vertical orientation, that is, the camera 100 is in the vertical state, the CPU sets the entire area 3a and the read-out area 3b as a vertical reading mode, as shown in FIG.3B (S44b).

Next, the AF process is started in the reading direction which is set in the above steps, that is, the image signals in the read-out area 3b set in the above steps are read out in the set reading direction (S45), and the AF evaluation value is obtained (S46). Then, the CPU 10 compares the obtained AF evaluation value with a predetermined threshold value. If the AF evaluation value is the threshold value or more ("YES" in step S47), the CPU 10 performs the AF process based on the obtained AF evaluation value (S49). If the AF evaluation value is less than the threshold value ("NO" in step S47), the CPU changes the reading direction of the image signals by the DSP 4 to another direction (for example, when the direction is set to the horizontal direction, it changes to the vertical reading direction), and the image signals are read-out by the DSP 4 to obtain the AF evaluation value (S48). The CPU 10 controls a driving pulse of the driving motor of the optical system 1 via the motor driver 2 to move the optical system 1 in accordance with the obtained AF evaluation value (S49). The CPU 10 may be configured to change the scanning direction of the outputs of the CMOS sensor 3 when the AF evaluation value is less than the threshold value.

As described above, according to the camera 100 of the above embodiment of the present invention, when photographing a subject image having horizontal stripes, that is, a subject image having contrast in the vertical direction, even in the case where the AF evaluation value obtained by reading-out the image signals in the vertical reading direction is small, and therefore the evaluation value sufficient to perform the AF control cannot be obtained, the setting of the reading direction or the scanning direction can be automatically changed to obtain the AF evaluation value so that the precise and high speed AF process can be achieved.

The above change of the reading direction or the scanning direction may be operated by operating a not-illustrated switch of the operating device 11 by the photographer.

According to an embodiment of the present invention, the high-speed AF control can be achieved regardless of the orientation of the camera by using the appropriately determined reading direction of the image signals. That is, a precisely-focused image can be obtained regardless of the orientation of the camera.

The present invention can be applied to a portable phone having a camera function, as well as to a digital camera.
Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An imaging apparatus, comprising
an image pickup device (3) comprising a sensor having a two-dimensional array of pixels having a first axis and a second axis perpendicular to the first axis, and configured to image a subject image and output image signals in an array corresponding to the subject image, the sensor having a changeable scanning direction parallel to the first axis or the second axis; and
an orientation detecting device (9) configured to detect whether the first axis of the sensor is horizontal or vertical,
**characterized by** further comprising;
an autofocus (AF) evaluation-value generating device (4) configured to read the image signals from the array output by the image pickup device (3) in a reading direction corresponding to the first or second axis of the sensor and generate an AF evaluation value based on the read image signals;
a control device (10) configured to select the reading direction of the AF evaluation-value generating device in accordance with the detected orientation of the sensor such that if the first axis of the sensor is detected to be horizontal, the direction corresponding to the first axis is selected as the reading direction of the AF evaluation-value generating device and if the first axis of the sensor is detected to be vertical, the direction corresponding to the second axis is selected as the reading direction of the AF evaluation-value generating device; and
a focus adjustment device (1,2) configured to perform a peak determination of a peak evaluation value based on the AF evaluation values to adjust a focal point of the imaging apparatus based on the peak AF evaluation value; wherein
the control device is configured to change the reading direction of the AF evaluation-value generating device and the scanning direction of the sensor if the AF evaluation value generated by the AF evaluation-value generating device in the selected direction does not reach a threshold value.

2. An image apparatus according to claim 1, wherein the AF evaluation-value enerating device is configured to generate an AF evaluation value based on a frequency component of the image signal of the subject image.

3. An imaging apparatus according to any one of the preceding claims, wherein the orientation detecting device is configured to detect an acceleration to determine the orientation of the imaging apparatus.

4. An imaging apparatus according to any one of claims 1 to 3, further comprising an operating device (11), wherein the scanning direction of the image pickup device and/or the reading direction of the AF evaluation-value generating device are changed by operating the operating device.

5. A portable phone comprising an imaging apparatus according to any one of the preceding claims.

6. A digital camera comprising an imaging apparatus according to any one of claims 1 to 4.

## Patentansprüche

1. Abbildungsvorrichtung, die umfasst:
eine Bildaufnahmevorrichtung (3), die einen Sensor umfasst, der eine zweidimensionale Pixelanordnung besitzt, die eine erste Achse und eine zu der ersten Achse senkrechte zweite Achse besitzt, und konfiguriert ist, ein Gegenstandsbild abzubilden und Bildsignale in einer Anordnung auszugeben, die dem Gegenstandsbild entspricht, wobei der Sensor eine zu der ersten Achse oder der zweiten Achse parallele änderbare Abtastrichtung besitzt; und
eine Orientierungsdetektionsvorrichtung (9), die konfiguriert ist, zu detektieren, ob die erste Achse des Sensors horizontal oder vertikal ist,
**dadurch gekennzeichnet, dass** sie ferner umfasst:
eine Autofokusevaluationswerterzeugungsvorrichtung (AF-Evaluationswerterzeugungsvorrichtung) (4), die konfiguriert ist, die durch die Bildaufnahmevorrichtung (3) ausgegebenen Bildsignale von der Anordnung in einer Leserichtung, die der ersten oder der zweiten Achse des Sensors entspricht, zu lesen und einen AF-Evaluationswert anhand der gelesenen Bildsignale zu erzeugen;
eine Steuervorrichtung (10), die konfiguriert ist, die Leserichtung der AF-Evaluationswerterzeugungsvorrichtung in Übereinstimmung mit der detektierten Orientierung des Sensors auszuwählen, so dass dann, wenn detektiert wird, dass die erste Achse des Sensors horizontal ist, die der ersten Achse entsprechende Richtung als die Leserichtung der AF-Evaluationswerterzeugungsvorrichtung ausgewählt wird, und dann, wenn detektiert wird, dass die erste Achse des Sensors vertikal ist, die der zweiten Achse entsprechende Richtung als die Leserichtung der AF-Evaluationswerterzeugungsvorrichtung ausgewählt wird; und
eine Fokusanpassungsvorrichtung (1, 2), die konfiguriert ist, eine Höchstwertbestimmung eines Höchstwertevaluationswerts anhand der AF-Evaluationswerte auszuführen, um einen Brennpunkt der Abbildungsvorrichtung anhand des Höchstwert-AF-Evaluationswertes anzupassen; wobei
die Steuervorrichtung konfiguriert ist, die Leserichtung der AF-Evaluationswerterzeugungsvorrichtung und die Abtastrichtung des Sensors zu ändern, wenn der durch die AF-Evaluationswerterzeugungsvorrichtung erzeugte AF-Evaluationswert in der ausgewählten Richtung keinen Grenzwert erreicht.

2. Bildvorrichtung nach Anspruch 1, wobei die AF-Evaluationswerterzeugungsvorrichtung konfiguriert ist, einen AF-Evaluationswert anhand einer Frequenzkomponente des Bildsignals des Gegenstandsbilds zu erzeugen.

3. Abbildungsvorrichtung nach einem der vorangehenden Ansprüche, wobei die Orientierungsdetektionsvorrichtung konfiguriert ist, eine Beschleunigung zu detektieren, um die Orientierung der Abbildungsvorrichtung zu bestimmen.

4. Abbildungsvorrichtung nach einem der Ansprüche 1 bis 3, die ferner eine Bedienungsvorrichtung (11) umfasst, wobei die Abtastrichtung der Bildaufnahmevorrichtung und/oder der Leserichtung der AF-Evaluationswerterzeugungsvorrichtung durch die Bedienung der Bedienungsvorrichtung geändert wird.

5. Tragbares Telefon, das eine Abbildungsvorrichtung nach einem der vorangehenden Ansprüche umfasst.

6. Digitalkamera, die eine Abbildungsvorrichtung nach einem der Ansprüche 1 bis 4 umfasst.

## Revendications

1. Appareil d'imagerie, qui comprend
un dispositif de prise d'images (3) qui comprend un capteur ayant un réseau de pixels en deux dimensions ayant un premier axe et un second axe perpendiculaire audit premier axe, et configuré pour imager une image de sujet et pour fournir des signaux d'image au sein d'un réseau correspondant à ladite image de sujet, ledit capteur ayant une direction de balayage modifiable parallèle audit premier axe ou audit second axe ; et
un dispositif de détection d'orientation (9) configuré pour détecter si ledit premier axe dudit capteur est horizontal ou vertical,
**caractérisé en ce qu'**il comprend en outre :
un dispositif de génération de valeur d'évaluation de zoom automatique (AF) (4) configuré pour lire lesdits signaux d'image provenant dudit réseau et fournis par ledit dispositif de prise d'images (3) dans une direction de lecture correspondant audit premier ou second axe dudit capteur, et pour générer une valeur d'évaluation de zoom automatique sur la base des signaux d'image lus ;
un dispositif de contrôle (10) configuré pour sélectionner la direction de lecture dudit dispositif de génération de valeur d'évaluation de zoom automatique selon l'orientation détectée dudit capteur de sorte que, si le premier axe dudit capteur est détecté comme étant horizontal, la direction correspondant audit premier axe soit sélectionnée comme étant la direction de lecture dudit dispositif de génération de valeur d'évaluation de zoom automatique, et, si le premier axe dudit capteur est détecté comme étant vertical, la direction correspondant audit second axe soit sélectionnée comme étant la direction de lecture dudit dispositif de génération de valeur d'évaluation de zoom automatique ; et
un dispositif de réglage de mise au point (1, 2) configuré pour effectuer une détermination de valeur d'évaluation maximale sur la base desdites valeurs d'évaluation de zoom automatique afin d'ajuster un point focal dudit appareil d'imagerie sur la base de ladite valeur d'évaluation de zoom automatique maximale ; dans lequel
ledit dispositif de contrôle est configuré pour modifier la direction de lecture dudit dispositif de génération de valeur d'évaluation de zoom automatique et la direction de balayage dudit capteur si ladite valeur d'évaluation de zoom automatique générée par ledit dispositif de génération de valeur d'évaluation de zoom automatique dans la direction sélectionnée n'atteint pas une valeur de seuil.

2. Appareil d'imagerie selon la revendication 1, dans lequel ledit dispositif de génération de valeur d'évaluation de zoom automatique est configuré pour générer une valeur d'évaluation de zoom automatique sur la base d'une composante de fréquence du signal d'image de ladite image de sujet.

3. Appareil d'imagerie selon l'une quelconque des revendications précédentes, dans lequel ledit dispositif de détection d'orientation est configuré pour détecter une accélération afin de déterminer l'orientation dudit appareil d'imagerie.

4. Appareil d'imagerie selon l'une quelconque des revendications 1 à 3, qui comprend en outre un dispositif d'exploitation (11), dans lequel la direction de balayage dudit dispositif de prise d'images et/ou la direction de lecture dudit dispositif de génération de valeur d'évaluation de zoom automatique sont modifiées en actionnant ledit dispositif d'exploitation.

5. Téléphone portable qui comprend un appareil d'imagerie selon l'une quelconque des revendications précédentes.

6. Appareil photo numérique qui comprend un dispositif d'imagerie selon l'une quelconque des revendications 1 à 4.
